# EUROPEAN PATENT SPECIFICATION

(11) **EP 1 769 325 B1**
(45) Date of publication and mention of the grant of the patent: **12.11.2008**
(21) Application number: 05754783.8
(22) Date of filing: 20.05.2005
(51) Int. Cl.: G06F 3/033

(54) **DEVICE FOR INPUT TO A SCREEN**
EINRICHTUNG ZUR EINGABE IN EINEN BILDSCHIRM
DISPOSITIF PERMETTANT DE SAISIR UNE ENTREE SUR UN ECRAN

(30) Priority: 01.06.2004 SE 0401396
(43) Date of publication of application: 04.04.2007
(73) Proprietor: Eklund, Mona, 724 68 Västerås (SE)
(72) Inventor: Eklund, Mona, 724 68 Västerås (SE)
(74) Representative: Holmberg, Nils Anders Patrik
(86) International application number: PCT/SE2005/000740
(87) International publication number: WO 2005/119420

(56) References cited:
- EP-A2- 1 387 242
- WO-A1-03/005176
- US-B1- 6 225 988

## Description

### TECHNICAL FIELD

The invention at hand relates to peripherals and methods to use such a peripheral, such as a stylus or keyboard, for input of user interaction with a unit having a data processing capability, such as a server, a personal computer, a hand held computer or a mobile phone. In particular the invention relates to such peripheral which is intended for users in a ware-house, stockroom or similar.

### BACKGROUND ART

There are several known peripherals for input of user interaction with a unit having a data processing capability. An example of such a peripheral is a mouse, a track-ball with buttons or a touch pad. Another example of a peripheral for user interaction is a stylus, such as similar to a pen or other object, used for user interaction on a touch screen. A touch screen may in this context have multiple areas with different functionality. For instance, one area may primarily be used for input by pressing or touching the screen and another area may be used for writing characters by means of a stylus or other object.

WO2004031933 describes a stylus-operated graphical user interface for a computer, which includes a sensing surface having an area corresponding to a data input field.

Input to a touch screen is common to certain applications. One such application is at a stock-house or ware-house where the device with data processing capability is intended to be used for communication with, for instance, computerized warehouse systems or logistic systems, which handles different kind of goods or products. Such goods or products may be placed in a package such as a card-board box, a package, a parcel or similar. A user, such as a truck driver or a worker, may have a task to retrieve a pack list or check handled packages on a display. A common used peripheral in such an application is a stylus shaped as a pen made out of a hard polymer. Such type of stylus is common for input through touch screens to devices such as hand held computers and to some cellular phones.

There are a number of problems relating to the use of the previous mentioned stylus used at a stock-house, ware-house or similar. One problem is that such stylus is difficult to handle for a user with gloves. Working gloves are often used to protect the user's hands, such as a worker handling packages. The larger the number of possible user interactions, the greater the problem is. The smaller the area for input of the touch screen is, the greater the problem is. With increased insulation/padding of the gloves the stylus becomes more difficult to handle for the user. To overcome the problem the user often removes a glove. This implies that with the mentioned stylus, time is lost that otherwise would be used to pack and handle packages. This is due to that the user removes and puts on the glove at input to the device. The time that on an annual basis is lost is substantial. For the owner or the operator of the stock-house, ware-house, or similar, this corresponds to a substantial cost.

A particular problem arises at stock-house or ware-house with a low temperature or a freezing temperature where gloves, due to the temperature, must be insulated/padded and due to that fairly thick. As a user repeatedly removes the glove, the user gets cold hands and fingers much faster than otherwise. In such a case the risk for input errors increases. As the user's hand gets cold, there is an increased probability that the user handles packages or goods in a destructive manner, such as dropping packages or goods. In order not to remove the glove some users solves the mentioned problem by keeping the glove and use the glove covered index finger for input. In such a case a problem is that the area on the touch screen intended for input is relatively small. It is then easy to perform incorrect input as the fairly thick glove is kept on. Another remaining problem is that certain type of input requires that graphics, for instance characters or numbers, are written on the touch screen, which is not possible wearing the glove without using the stylus.

In a stock-house or ware-house it is common to position a unit with a data processing capability or communicates with such a unit, such as a terminal, on a truck or at a wall at a package handling station. A user at a handling station for instance a worker handling packages or goods, moves around in areas remote from the device while handling packages or goods. For instance, after packing a pallet or cage with packages or goods the user signs off a bill of material by means of the unit. A problem is where to keep the stylus between the occasions of user input. A solution to the problem is to place an attaching element, such as a cramp, at the unit. A remaining problem is that the user regularly drops the stylus to the floor. The floor may have bars through which the stylus disappears. Another way of handling the problem is to attach the stylus to a string, for instance with a mechanism with a yo-yo function. This decreases the risk that the stylus disappears. However, the user will still drop the stylus from time to time, which not only means that the user gets distracted but also to loss of packing time. It has also been seen that in practice a string often is snapped off.

EP1405161 describes a computer input device on a glove, which includes fittings for a user's fingers and adjustable straps for fastening to a user's wrist. A tracking device for controlling cursor movement on a video display is affixed to the glove for positioning next to the end of one of the user's fingers. Pressure plates for controlling the various right and left mouse "clicking" functions are affixed to the glove for positioning next to the ends of the other of the user's fingers. EP1405161 describes a glove with which a user can interact with a computer. However, the previous mentioned problems remain. Other devices similar to a glove are JP2003015810 and EP1387242.

US 2001/0053306 A1 relates to an adjustable and economical finger stylus useful in operating a touch sensitive screen for entering data in, e.g., a personal data assistant (PDA). The adjustable elements of the finger stylus secures the stylus to the finger during use.

### SUMMARY OF THE INVENTION

An object of the invention is to solve the previous mentioned problems and other problems with the previous known stylus. A device according to the invention is intended to be used for an input of a user interaction on a touch screen of a unit having a data processing capability, characterized in that the device is similar to a working glove, which working glove covers a complete hand of a user, where the working glove comprises a tip for an index finger adapted for input to the touch screen. The tip of the index finger comprises an element at least partly made out of a relatively hard polymer. The surface of the element which is intended to be applied to the touch screen has a round shape, with a diameter less than 3 mm in cross section. The element has the shape of a ball, is attached to the outside of the finger tip and is further covered by a soft and cold-resistant material such as latex. A device according to the invention may be adapted to be used in a stock-house or ware-house where the user, in addition to the previous mentioned input, uses the device for moving and/or packing packages. Examples of alternative terms for packages are boxes, wrapping, pieces of goods, parcels or tubes. The user may pack them on a pallet, a trolley, truck or similar. In a preferred embodiment the device is padded with insulation. The tip of the index finger should be adapted to withstand repeated use in freezing temperature.

An advantage with the invention is that the user performs heavy work that inflicts wear and tear on the device, strokes on the device and forces from squeeze, and with the same device uses it for input to a touch screen. In this manner valuable time is saved when the user goes from a work-operation of packing, to a work-operation of performing input. This compared to previous known technology where the user often removes a glove in order to perform an input operation by means of a stylus, such as a pen shaped element, or keeping the glove on with an increased risk of failing to grip or losing the grip of the stylus. The invention is also an improvement compared to the glove like devices previous mentioned in the section describing background art which are either too expensive or unable to manage the wear and tear that comes with packing.

### BRIEF DESCRIPTION OF THE DRAWINGS

The present invention will be described in more detail in connection with the enclosed schematic drawings.

Figure 1 shows an overview of a device according to the invention.

Figure 2 shows an example of a detail resembling a finger-stall, used in an embodiment of the invention.

Figure 3 shows an overview of a detail of an embodiment of the device according to the invention. The detail is shaped as a ball of polymer attached to the outside of the finger tip of the glove.

Figure 4 shows a system comprising a touch screen and a working glove according to the invention.

Figure 5 shows an embodiment in which the grip zones of the glove are covered with a material with high friction that improves the user's ability to keep the grip of the packages that are handled during packing.

### DETAILED DESCRIPTION OF THE INVENTION

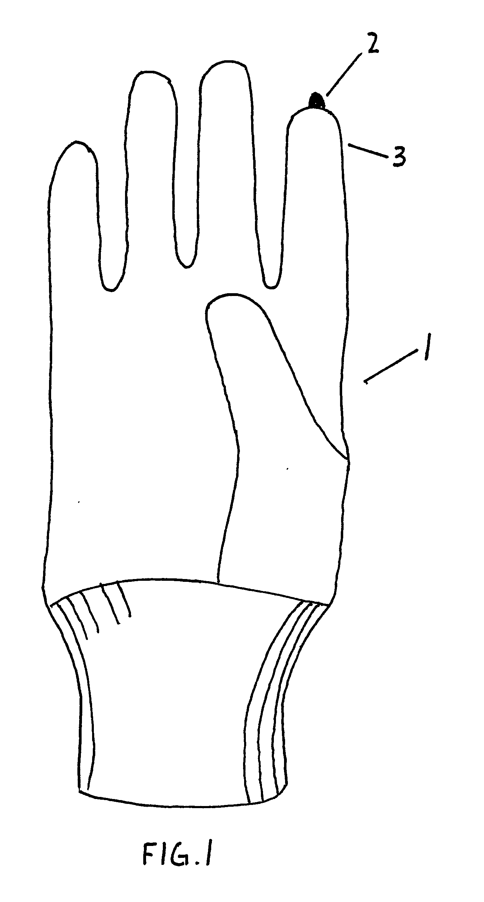

A device according the invention can be manufactured in several different ways, and accordingly several embodiments are possible. Figure 1 shows an example of the device 1 with for the purpose shaped tip of the index finger. In one embodiment the device is insulated. Such a device may comprise several layers of different materials.

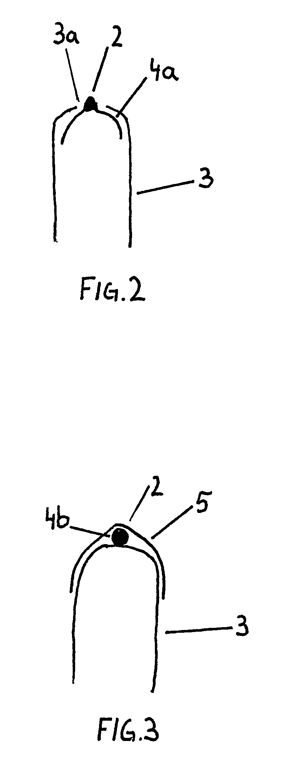

Figure 2 shows a detail of an embodiment where the shaped tip of the index finger 3 comprise a detail 4a similar to a finger-stall made out of polymer which is attached to the tip of working glove's index finger 3. The index finger 3 of the working glove may be cut open or in another way opened 3a in the tip in order for the top of the detail similar to a finger-stall 4a to reach through. The top 2 of the detail similar to a finger-stall is intended to be moved against the touch screen and may be in the shape of a half sphere. The top 2 of the detail similar to a finger-stall 4a may also be in a conical shape.

Figure 3 shows an embodiment where a ball 4b made of polymer is attached to the outside of the finger tip of the glove and covered 5 with a soft and cold-resistant material. A suitable covering for the finger-tip is latex, or similar material, which material qualities are stable down to -30 degrees Celsius.

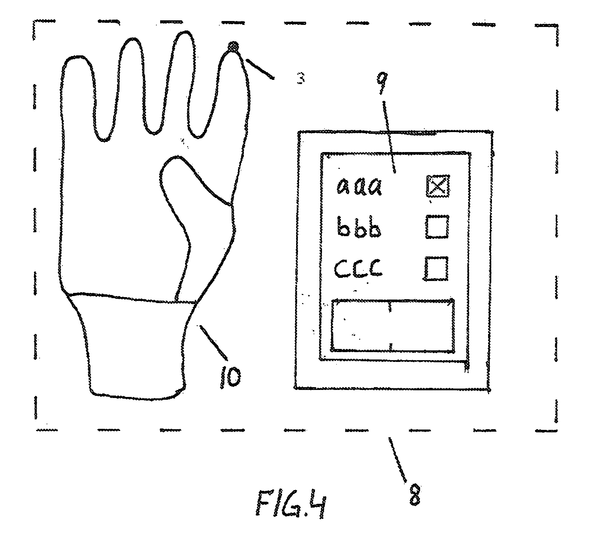

Figure 4 shows an example of a system 8 according to the invention intended for input of a user interaction to a unit having a data processing capability. The system 8 comprises a touch screen 9 and a working-glove 10, which covers the complete hand of a user. The working-glove has a finger-tip 3 shaped in accordance with the purpose of the invention.

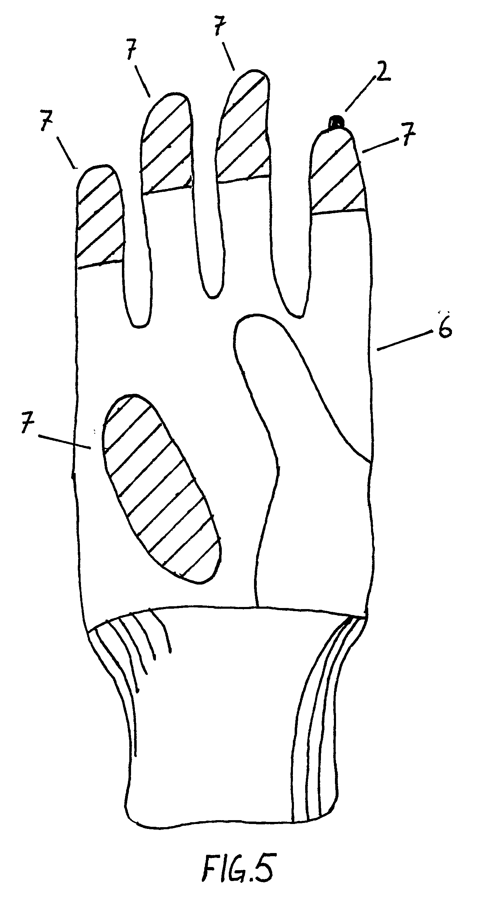

A device 1 according to the invention may in an embodiment be similar to working-glove and having qualities such as being durable and facilitate for the user to keep the grip of packages which the user handles during packing. In an embodiment 6, shown in figure 5, the device has a surface or covering at grip-zones 7 that facilitates for the user to, in a secure manner, take a grip of packages, such as boxes, pieces of goods or similar. A suitable material for the glove is leather and/or material made out of textile suitable covering at the grip-zones may include burl or cushion-like attached details.

## Claims

1. A working-glove (1) for input of a user interaction to a unit with a data processing capability by means of touch screen **characterized in that**
- the working-glove (1) which covers the user's entire hand comprises a finger-tip (3) for an index finger comprising a detail (4b) at least partly made out of a hard polymer intended to transfer a force from the user's index finger to the touch screen;
- the top (2) of the finger-tip (3) for the index finger intended to be applied to the touch screen has a mainly round shape with a small cross section diameter compared to the diameter of the index finger;
- the detail (4b) has the shape of a ball and is attached to the outside of the finger-tip (3) of the working-glove (1) and is further covered by a soft and cold-resistant material (5) such as latex.

2. A working-glove (1) according to claim 1 **characterized in that** the working-glove (1) is insulated and **in that** the insulation is thick.

## Patentansprüche

1. Arbeitshandschuh (1) für die Eingabe einer Benutzerinteraktion in eine Einheit mit Datenverarbeitungsvermögen mittels eines Touchscreens, **dadurch gekennzeichnet, dass**
- der Arbeitshandschuh (1), der die gesamte Hand des Benutzers bedeckt, eine Fingerspitze (3) für einen Zeigefinger umfassend ein Teil (4b), das zumindest teilweise aus einem harten Polymer ist, umfasst, die zur Übertragung einer Kraft vom Zeigefinger des Benutzers zum Touchscreen gedacht ist,
- die Spitze (2) der Fingerspitze (3) für den Zeigefinger, die für die Anwendung auf den Touchscreen gedacht ist, hauptsächlich eine runde Gestalt mit einem kleinen Querschnittsdurchmesser verglichen mit dem Durchmesser des Zeigefingers aufweist;
- das Teil (4b) die Gestalt einer Kugel aufweist und an dem Äußeren der Fingerspitze (3) des Arbeitshandschuhs (1) befestigt ist und ferner durch ein weiches und kältebeständiges Material (5) wie Latex bedeckt ist.

2. Arbeitshandschuh (1) nach Anspruch 1, **dadurch gekennzeichnet, dass** der Arbeitshandschuh (1) isoliert ist und dass die Isolierung dick ist.

## Revendications

1. Gant de travail (1) pour l'entrée d'une interaction d'utilisation à une unité ayant une capacité de traitement des données au moyen d'un écran tactile, **caractérisé en ce que** :
- le gant de travail (1) qui couvre la main entière de l'utilisateur comprend un bout de doigt (3) destiné à un index comprenant un élément (4b) constitué au moins partiellement d'un polymère rigide destiné à transférer une force de l'index de l'utilisateur à l'écran tactile,
- le dessus du bout de doigt (3) destiné à l'index destiné à être appliqué à l'écran tactile présente une forme principalement ronde avec un faible diamètre en section transversale par rapport au diamètre de l'index,
- l'élément (4b) se présente sous la forme d'une boule et est fixé à l'extérieur du bout de doigt (3) du gant de travail (1) est de plus recouvert d'un matériau souple et résistant au froid (5) comme le latex.

2. Gant de travail (1) selon la revendication 1, **caractérisé en ce que** le gant de travail (1) est isolé et **en ce que** l'isolation est épaisse.
